# EUROPEAN PATENT APPLICATION

(11) **EP 4 394 968 A1**
(43) Date of publication of application: **03.07.2024**
(21) Application number: 23866698.6
(22) Date of filing: 13.11.2023
(51) Int. Cl.: H01M 10/04, H01M 50/463, H01M 50/409

(54) **BATTERY CELL, SECONDARY BATTERY AND ELECTRIC DEVICE**

(30) Priority: 16.11.2022 CN 202223048292 U
(71) Applicant: Ningde Amperex Technology Limited, Zhangwan Town, Jiaocheng District, Fujian Province Ningde City Fujian 352100 (CN)
(72) Inventor: LI, Yuanzhou, Ningde, Fujian 352100 (CN)
(74) Representative: Icosa
(86) International application number: PCT/CN2023/131332
(87) International publication number: WO 2024/104297

(57) **Abstract**

This application provides a battery cell, a secondary battery, and an electric device, and relates to the field of battery technologies. The battery cell includes an electrode assembly, where the electrode assembly includes a first separator, a second separator, and multiple electrode plates stacked. The multiple electrode plates include two outer electrode plates located at two ends and multiple inner electrode plates located between the two outer electrode plates. The first separator is disposed between the outer electrode plate and the inner electrode plate adjacent to the outer electrode plate; and the second separator is disposed between adjacent two of the inner electrode plates; where thickness of the first separator is greater than thickness of the second separator. Compared to the thickness of the separator in the middle region of the electrode assembly, the thickness of the separator at the end of the electrode assembly is increased, which makes the first separator stronger and less prone to puncture, reducing the short-circuit risk of the battery cell and improving the safety performance of the battery cell. The larger thickness of the first separator can also increase the pass rate of the high-voltage test and impact test of the battery cell, reduce the defect rate of the battery cell, and enhance the reliability of the battery cell.

## Description

### CROSS-REFERENCE TO RELATED APPLICATIONS

This application claims priority to Chinese Patent Application No. 202223048292.5, filed on November 16, 2022 and entitled "BATTERY CELL, SECONDARY BATTERY, AND ELECTRIC DEVICE", which is incorporated herein by reference in its entirety.

### TECHNICAL FIELD

This application relates to the field of battery technologies, and specifically to a battery cell, a secondary battery, and an electric device.

### BACKGROUND

With the development of new energy technologies, the energy storage devices have been increasingly widely used in, for example, mobile phones, laptop computers, battery motorcycles, electric vehicles, electric airplanes, electric ships, electric toy cars, electric toy ships, electric toy airplanes, and electric tools.

The secondary battery, as an energy storage device, includes a positive electrode plate, a negative electrode plate, an electrolyte, and the like. Lithium ions shuttle back and forth between the positive electrode plate and the negative electrode plate through the electrolyte to achieve charging and discharging. For the secondary battery, both its energy density and safety need to be considered. Therefore, how the safety of the secondary battery is improved is a technical issue to be addressed urgently.

### SUMMARY

Some embodiments of this application provide a battery cell, a secondary battery, and an electric device, to improve the safety performance of the battery cell and secondary battery.

According to a first aspect, an embodiment of this application provides a battery cell. The battery cell includes an electrode assembly, where the electrode assembly includes a first separator, a second separator, and multiple electrode plates stacked. The multiple electrode plates include two outer electrode plates located at two ends and multiple inner electrode plates located between the two outer electrode plates. The first separator is disposed between the outer electrode plate and the inner electrode plate adjacent to the outer electrode plate; and the second separator is disposed between adjacent two of the inner electrode plates; where thickness of the first separator is greater than thickness of the second separator.

In the foregoing technical solution, the first separator is disposed between the outer electrode plate and the inner electrode plate adjacent to the outer electrode plate, and the second separator is disposed between adjacent two of the inner electrode plates, meaning that the two first separators are respectively located at the ends of the electrode assembly along the stacking direction of the electrode plates. The thickness of the first separator being greater than the thickness of the second separator can be understood as follows: compared to the thickness of the separator in the middle region of the electrode assembly, the thickness of the separator at the end of the electrode assembly is increased, which makes the first separator stronger and not prone to puncture, thus reducing the short-circuit risk of the battery cell and improving the safety performance of the battery cell. The larger thickness of the separator (the first separator) at the end of the electrode assembly can also increase the pass rates of the battery cell in the high-voltage test and impact test, reduce the defect rate of the battery cell, and improve the reliability of the battery cell.

In some embodiments of the first aspect of this application, the thickness of the first separator is h₁, and the thickness of the second separator is h₂, where 2 µm≤h₁-h₂≤5 µm.

In the foregoing technical solution, if h₁-h₂<2 µm, the thickness of the first separator is slightly larger than the thickness of the second separator, the strength of the first separator is not significantly higher than the strength of the second separator, and the first separator is at high risk of being punctured. If h₁-h₂>5 µm, the thickness of the first separator is significantly larger than the thickness of the second separator, the first separator has greater strength, but the large thickness of the first separator decreases the energy density of the battery cell. Therefore, 2 µm<h₁-h₂≤5 µm not only ensures that the first separator has good strength and is not prone to puncture, but also ensures that the increased thickness of the first separator does not significantly decrease the energy density of the battery cell, allowing the energy density of the battery cell to meet the actual requirement.

In some embodiments of the first aspect of this application, 3 µm≤h₁-h₂≤5 µm.

In the foregoing technical solution, compared to 2 µm≤h₁-h₂≤3 mm, in the case of 3 µm<h₁-h₂≤5 µm, the first separator has a larger thickness and better strength, and is less likely to be punctured, so the short-circuit risk of the battery cell is lower and the battery cell has better safety performance.

In some embodiments of the first aspect of this application, the thickness of the second separator is h₂, where 0 µm<h₂≤7 µm.

In the foregoing technical solution, a smaller separator of the electrode assembly allows the battery cell to have a higher energy density. Therefore, the thickness h₂ of the second separator being equal to or smaller than 7 µm is conducive to improving the energy density of the battery cell.

In some embodiments of the first aspect of this application, 3 µm≤h₂≤6 µm.

In the foregoing technical solution, if h₂<3 µm, the thickness of the first separator is small, resulting in weak isolation between the outer electrode plate and the inner electrode plate adjacent to the outer electrode plate. If 6 µm<h₂≤7 µm, the thickness of the first separator is large, significantly decreasing the energy density of the battery cell. Therefore, 3 µm≤h₂≤6 µm ensures that the thickness of the first separator meets the requirement for isolation between the outer electrode plate and the inner electrode plate adjacent to the outer electrode plate, and also minimizes the impact on the energy density of the battery cell.

In some embodiments of the first aspect of this application, the thickness of the first separator is h₁, and the thickness of the second separator is h₂, where h₁-h₂>5 µm.

In the foregoing technical solution, compared to h₁-h₂≤5 µm, in the case of h₁-h₂>5 µm, the thickness increase of the first separator compared to the second separator is larger, and the first separator is stronger and less likely to be punctured, thus further reducing the short-circuit risk of the battery cell and improving the safety performance of the battery cell.

In some embodiments of the first aspect of this application, the electrode plate includes a current collector, and thickness of the current collectors of some of the multiple electrode plates is smaller than thickness of the current collectors of the other electrode plates.

In the foregoing technical solution, that thickness of the current collectors of some of the multiple electrode plates is smaller than thickness of the current collectors of the other electrode plates can be understood as follows: the thickness of the current collectors of some of the multiple electrode plates is decreased compared to the thickness of the current collectors of the other electrode plates, which can alleviate the problem of loss in energy density caused by the increased thickness of the first separator compared to the second separator.

In some embodiments of the first aspect of this application, thickness of the current collector of the outer electrode plate is smaller than thickness of the current collector of the inner electrode plate.

In the foregoing technical solution, the thickness of the current collector of the outer electrode plate being smaller than the thickness of the current collector of the inner electrode plate is conducive to increasing the pass rate of the battery cell in the high-voltage test.

In some embodiments of the first aspect of this application, the thickness of the current collector of the outer electrode plate is m₁, and the thickness of the current collector of the inner electrode plate is m₂, where 2 µm≤m₂-m₁≤5 µm.

In the foregoing technical solution, if m₂-m₁<2 µm, a thickness decrease of the current collector of the outer electrode plate compared to the current collector of the inner electrode plate is quite small, resulting in a weak ability of alleviating loss in the energy density caused by the decreased thickness of the first separator compared to the second separator. If m₂-m₁>5 µm, the thickness decrease of the current collector of the outer electrode plate compared to the current collector of the inner electrode plate is quite large, leading to a weak strength of the current collector of the outer electrode plate, and leaving the outer electrode plate easy to break and difficult to pass the high-voltage test and impact test. Therefore, 2 µm≤m₂-m₁≤5 µm not only ensures that the outer electrode plate has good strength, but also ensures that the thickness decrease of the current collector of the outer electrode plate compared to the current collector of the inner electrode plate can significantly alleviate the problem of loss in the energy density caused by the increased thickness of the first separator compared to the second separator.

In some embodiments of the first aspect of this application, the second separator includes a connecting section and multiple body sections, the multiple body sections are arranged along a stacking direction of the electrode plates, adjacent two of the inner electrode plates are separated by the body section, and the connecting section connects adjacent two of the body sections.

In the foregoing technical solution, the second separator includes the connecting section and multiple body sections, and two adjacent body sections are connected by the connecting section, making the second separator a continuous structure. This facilitates the assembly and formation of the electrode assembly and allows the second separator to better separate any two adjacent inner electrode plates.

According to a second aspect, an embodiment of this application provides a secondary battery including the battery cell provided in any one of the embodiments of the first aspect.

In the foregoing technical solution, the battery cell provided in any one of the embodiments of the first aspect has low short-circuit risk and good safety and reliability, and the secondary battery including such battery cell also has good safety and reliability.

According to a third aspect, an embodiment of this application provides an electric device including the secondary battery provided in the embodiment of the second aspect.

In the foregoing technical solution, the secondary battery provided in the embodiment of the second aspect has good safety and reliability, and can improve the electrical safety of the electric device powered by the secondary battery. The secondary battery can stably and reliably supply power to the electric device.

### BRIEF DESCRIPTION OF DRAWINGS

In order to describe the technical solutions in the embodiments of this application more clearly, the following briefly describes the accompanying drawings required for describing the embodiments. It should be appreciated that, the accompanying drawings below only show some embodiments of this application, and thus should not be considered as a limitation to the scope. A person of ordinary skill in the art may still derive other related drawings from the accompanying drawings without creative efforts.
FIG. 1 is a cross-sectional view of a battery cell according to some embodiments of this application;
FIG. 2 is a cross-sectional view of a battery cell according to some other embodiments of this application; and
FIG. 3 is a cross-sectional view of a battery cell according to still some other embodiments of this application.

Reference signs: 100. battery cell; 10. electrode assembly; 11. first separator; 12. second separator; 121. connecting section; 122. body section; 13. electrode plate; 131. outer electrode plate; 132. inner electrode plate; 133. current collector; 134. active substance layer; 13a. positive electrode plate; 13b. negative electrode plate; 14. third separator; 20. housing; X. first direction; and Y. second direction.

### DETAILED DESCRIPTION

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all of the embodiments of this application. Generally, the components of the embodiments of this application as described and illustrated in the accompanying drawings herein can be arranged and designed in a variety of configurations.

Therefore, the following detailed description of the embodiments of this application as provided in the accompanying drawings is not intended to limit the scope of this application but merely to represent selected embodiments of this application. All other embodiments obtained by persons of ordinary skill in the art based on the embodiments of this application without creative efforts shall fall within the protection scope of this application.

It should be noted that, without conflict, the embodiments and features in the embodiments in this application may be combined with each other.

It should be noted that similar reference signs and letters indicate similar items in the following drawings, and therefore once an item is defined in one drawing, it does not need to be further defined and explained in the subsequent drawings.

In the description of the embodiments of this application, it should be noted that the orientations or positional relationships as indicated are orientations or positional relationships based on the accompanying drawings, or conventional orientations or positional relationships of products of this application, or orientations or positional relationships as conventionally understood by persons skilled in the art, and the orientations or positional relationships as indicated are merely for ease and brevity of description of this application rather than indicating or implying that the apparatuses or elements mentioned must have specific orientations or must be constructed or manipulated according to specific orientations, and therefore cannot be understood as limitations on this application. In addition, the terms "first", "second", "third", and the like are merely intended for distinguishing purposes and shall not be understood as any indication or implication of relative importance.

Currently, from a perspective of market development, application of secondary batteries is becoming more extensive. The secondary batteries have been widely used in electric transportation vehicles such as electric bicycles, electric motorcycles, and electric cars, and various field such as electric tools, drones, and energy storage devices. With the continuous expansion of application fields of the secondary batteries, market demands for the secondary batteries are also increasing.

In terms of connection method, the secondary battery may be a single battery cell or a battery pack formed by multiple battery cells connected in series, parallel, or series-parallel. Being connected in series-parallel means that the battery cells are electrically connected in parallel and series. In terms of type, the secondary batteries may include but are not limited to a lithium metal secondary battery, a lithium-ion secondary battery (lithium-ion battery), a sodium-ion secondary battery, a lithium polymer secondary battery, and a lithium-ion polymer secondary battery.

The battery cell includes an electrode assembly, and the electrode assembly may be a wound electrode assembly or a stacked electrode assembly. The electrode assembly includes a separator and multiple electrode plates stacked, and the separator is disposed between two electrode plates with opposite polarities to separate them.

The inventors have found that decreasing the thickness of the separator allows the battery cell to have a high energy density, but as the separator gets thinner, the strength of the separator becomes weaker. As a result, the separator is easily punctured, leading to short circuit of the battery cell and low safety performance of the battery cell, especially in the stacking direction of the electrode plates. The decreasing thickness of the separator also exacerbates hardware issues of the battery cell, including low pass rates in the high-voltage test and impact test. This not only increases the defect rate of the battery cell during production, but also reduces the reliability of the battery cell during use. For example, it is difficult for the battery cell to withstand high voltage, and the battery cell has a weak ability of resisting external impact.

Based on the foregoing considerations, to alleviate the problems of short circuit and increased defect rate of the battery cell caused by the fact that the separator has a small thickness and is easily punctured, an embodiment of this application provides a battery cell, where an electrode assembly of the battery cell includes a first separator, a second separator, and multiple electrode plates stacked. The multiple electrode plates include two outer electrode plates located at two ends and multiple inner electrode plates located between the two outer electrode plates. The first separator is disposed between the outer electrode plate and the inner electrode plate adjacent to the outer electrode plate; and the second separator is disposed between adjacent two of the inner electrode plates; where thickness of the first separator is greater than thickness of the second separator.

The first separator is disposed between the outer electrode plate and the inner electrode plate adjacent to the outer electrode plate, and the second separator is disposed between adjacent two of the inner electrode plates, meaning that the two first separators are respectively located at the ends of the electrode assembly along the stacking direction of the electrode plates. The thickness of the first separator being greater than the thickness of the second separator can be understood as follows: compared to the thickness of the separator in the middle region of the electrode assembly, the thickness of the separator at the end of the electrode assembly is increased, which makes the first separator stronger and not prone to puncture, thus reducing the short-circuit risk of the battery cell and improving the safety performance of the battery cell.

In addition, the larger thickness of the separator (the first separator) at the end of the electrode assembly can also increase the pass rates of the battery cell in the high-voltage test and impact test, reduce the defect rate of the battery cell, and improve the reliability of the battery cell.

The battery cell disclosed in this embodiment of this application may be used in, without limitation to, electric devices such as electric two-wheelers, electric tools, drones, and energy storage devices. The battery with the operating condition described in this application may be used as the power system for electric device. This is conducive to improving the safety performance of the battery cell as well as the electrical safety and reliability of the electric device.

An embodiment of this application provides an electric device that uses the secondary battery as the power supply. The electric device may be, but is not limited to, an electronic device, an electric tool, an electric vehicle, a drone, or an energy storage device. The electronic device may include a mobile phone, a tablet, a laptop, or the like, the electric tool may include an electric drill, an electric saw, or the like, and the electric vehicle may include an electric car, an electric motorcycle, an electric bicycle, or the like.

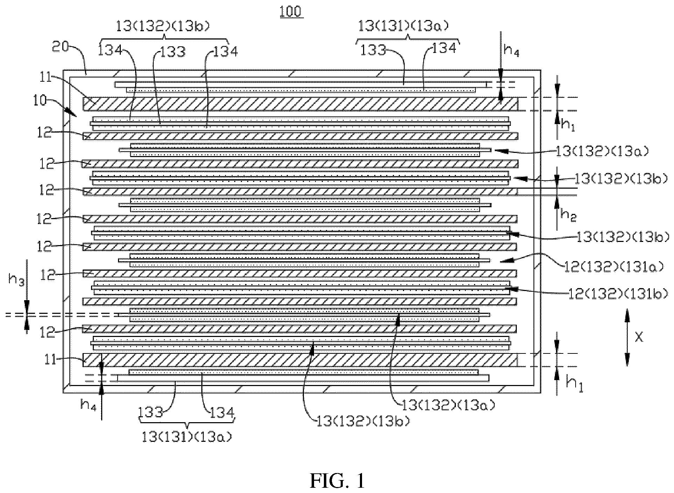

As shown in FIGs. 1 to 3, an embodiment of this application provides a battery cell 100. The battery cell 100 includes an electrode assembly 10, and the electrode assembly 10 includes a first separator 11, a second separator 12, and multiple electrode plates 13 stacked. The multiple electrode plates 13 include two outer electrode plates 131 located at two ends and multiple inner electrode plates 132 located between the two outer electrode plates 131. The first separator 11 is disposed between the outer electrode plate 131 and the inner electrode plate 132 adjacent to the outer electrode plate; and the second separator 12 is disposed between adjacent two of the inner electrode plates 132; where thickness of the first separator 11 is greater than thickness of the second separator 12.

The electrode assembly 10 is a laminated electrode assembly 10. The electrode plate 13 includes a current collector 133 and an active substance layer 134, and the active substance layer 134 is applied to a surface of the current collector 133 along a thickness direction of the electrode plate 13. Some of the multiple electrode plates 13 are positive electrode plates 13a, and the other ones are negative electrode plates 13b. The positive electrode plate 13a and the negative electrode plate 13b are alternately stacked along a first direction X, the first direction X being parallel to the thickness direction of the electrode plate 13.

The battery cell 100 mainly relies on movement of metal ions between the positive electrode plate 13a and the negative electrode plate 13b to work. The positive electrode plate 13a includes a positive electrode current collector and a positive electrode active substance layer. The positive electrode active substance layer is applied to a surface of the positive electrode current collector. In some embodiments, the positive electrode current collector may further include a portion uncoated with the positive electrode active substance layer. The portion of the positive electrode current collector uncoated with the positive electrode active substance layer bulges out of the other portion of the positive electrode current collector coated with the positive electrode active substance layer, and the portion of the positive electrode current collector uncoated with the positive electrode active substance layer is used as a positive electrode tab. In some other embodiments, the positive electrode tab may alternatively be a structure that is separated from the positive electrode current collector and then electrically connected to it. Taking a lithium-ion battery as an example, the positive electrode current collector may be made of aluminum, and the positive electrode active substance may be lithium cobaltate, lithium iron phosphate, ternary material, lithium manganate, or the like. The negative electrode plate 13b includes a negative electrode current collector and a negative electrode active substance layer. The negative electrode active substance layer is applied to a surface of the negative electrode current collector. In some embodiments, the negative electrode current collector further includes a portion uncoated with the negative electrode active substance layer. The portion of the negative electrode current collector uncoated with the negative electrode active substance layer bulges out of the other portion of the negative electrode current collector coated with the negative electrode active substance layer, and the portion of the negative electrode current collector uncoated with the negative electrode active substance layer is used as a negative electrode tab. In some other embodiments, the negative electrode tab may alternatively be a structure that is separated from the negative electrode current collector and then electrically connected to it. The negative electrode current collector may be made of copper, and the negative electrode active substance may be carbon, silicon, or the like. To allow a large current to pass through without any fusing, multiple positive electrode tabs are provided and stacked together, and multiple negative electrode tabs are provided and stacked together.

The two outer electrode plates 131 may both be positive electrode plates 13a or negative electrode plates 13b. Alternatively, one of the two outer electrode plates 131 is a positive electrode plate 13a and the other is a negative electrode plate 13b. The active substance layer 134 may be applied to two surfaces of the current collector 133 of the outer electrode plate 131 along the thickness direction of the electrode plate 13. Alternatively, the active substance layer 134 may be applied to only a surface facing the inner electrode plate 132. In FIG. 1, the two outer electrode plates 131 are both positive electrode plates 13a and the active substance layer 134 is applied to only surfaces of the current collectors 133 of the two outer electrode plates 131 facing the surfaces of the inner electrode plates 132, so as to avoid waste of the active substance layer 134.

The multiple inner electrode plates 132 include positive electrode plates 13a and negative electrode plates 13b, and the active substance layer 134 is applied to two opposite surfaces of the current collector 133 of the inner electrode plate 132 along the thickness direction of the electrode plate 13.

The first separator 11 and the second separator 12 may be made of a same material. For example, the material of both the first separator 11 and the second separator 12 is PP (polypropylene, polypropylene) or PE (polyethylene, polyethylene). It should be noted that the first separator 11 and the second separator 12 being made of the same material does not mean that proportions of individual components of the material of the first separator 11 and the second separator 12 are exactly the same.

The first separator 11 and the second separator 12 may alternatively be made of different materials. For example, the first separator 11 is made of PP and the second separator 12 is made of PE, or the first separator 11 is made of PE and the second separator 12 is made of PP. The thickness of the first separator 11 refers to the size of the first separator 11 along the first direction X, and the thickness of the second separator 12 refers to the size of a portion of the second separator 12 between two adjacent inner electrode plates 132 along the first direction X. As shown in FIG. 1, the thickness of the first separator 11 is h₁, and the thickness of the second separator 12 is h₂, where h₁<h₂.

The first separator 11 is disposed between the outer electrode plate 131 and the inner electrode plate 132 adjacent to the outer electrode plate, and the second separator 12 is disposed between adjacent two of the inner electrode plates 132, meaning that the two first separators 11 are respectively located at the ends of the electrode assembly 10 along the stacking direction of the electrode plates 13. The thickness of the first separator 11 being greater than the thickness of the second separator 12 can be understood as follows: compared to the thickness of the separator in the middle region of the electrode assembly 10, the thickness of the separator at the end of the electrode assembly 10 is increased, which makes the first separator 11 stronger and not prone to puncture, thus reducing the short-circuit risk of the battery cell 100 and improving the safety performance of the battery cell 100. The larger thickness of the separator (the first separator 11) at the end of the electrode assembly 10 can also increase the pass rates of the battery cell 100 in the high-voltage test and impact test, reduce the defect rate of the battery cell 100, and improve the reliability of the battery cell 100.

It should be noted that the reason why the second separator 12 is punctured in the related art may be burrs on the current collector 133 of the inner electrode plate 132 adjacent to the outer electrode plate 131, the active substance layer 134 unevenly applied to the inner electrode plate 132 adjacent to the outer electrode plate 131, and other particulate substance absorbed onto the inner electrode plate 132 adjacent to the outer electrode plate 131 due to static electricity. These factors can puncture the second separator 12 directly or puncture the second separator 12 upon impact to the battery cell 100.

The battery cell 100 further includes a housing 20, and an accommodating space is formed in the housing 20 for accommodating the electrode assembly 10. The housing 20 may further accommodate an electrolyte or a solid electrolyte. The material of the housing 20 includes but is not limited to aluminum or steel.

As shown in FIG. 1, in some embodiments, the thickness of the first separator 11 is h₁, and the thickness of the second separator 12 is h₂, where 2 µm<h₁-h₂≤5 µm. In some embodiments, 3 µm<h₁-h₂≤5 µm.

Specifically, h₁-h₂ may be 2 µm, 2.5 µm, 3 µm, 3.5 µm, 4 µm, 4.5 µm, 5 µm, or the like. Certainly, h₁-h₂ may alternatively be another value unlisted in the range of 2 µm-5 µm.

If h₁-h₂<2 µm, the thickness of the first separator 11 is slightly larger than the thickness of the second separator 12, the strength of the first separator 11 is not significantly higher than the strength of the second separator 12, and the first separator 11 is at high risk of being punctured. If h₁-h₂>5 µm, the thickness of the first separator 11 is significantly larger than the thickness of the second separator 12, the first separator 11 has greater strength, but the large thickness of the first separator 11 decreases the energy density of the battery cell 100. Therefore, 2 µm≤h₁-h₂≤5 µm not only ensures that the first separator 11 has good strength and is not prone to puncture, but also ensures that the increased thickness of the first separator 11 does not significantly decrease the energy density of the battery cell 100, allowing the energy density of the battery cell 100 to meet the actual requirement.

Certainly, in some other embodiments, the thickness of the first separator 11 is h₁, and the thickness of the second separator 12 is h₂, where h₁-h₂>5 µm.

Specifically, h₁-h₂ may be 5.5 µm, 6 µm, 6.5 µm, 7 µm, 7.5 µm, 8 µm, or the like. h₁-h₂ may alternatively be another value unlisted within the range greater than 5 µm.

Compared to h₁-h₂≤5 µm, in the case of h₁-h₂>5 µm, the thickness increase of the first separator 11 compared to the second separator 12 is larger, and the first separator 11 has better strength and is less likely to be punctured, thus further reducing the short-circuit risk of the battery cell 100 and improving the safety performance of the battery cell 100.

In some embodiments, the thickness of the second separator 12 is h₂, where 0 µm<h₂≤7 µm. In some embodiments, 3 µm≤h₂≤6 µm.

Specifically, h₂ may be 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, and the like. h₂ may alternatively be another value unlisted within the range smaller than 7 µm.

A smaller separator of the electrode assembly 10 is more advantageous for the battery cell 100 to have a higher energy density. Therefore, the thickness h₂ of the second separator 12 being equal to or smaller than 7 µm is conducive to improving the energy density of the battery cell 100.

In this embodiment, under a condition that the thickness h₂ of the second separator 12 is less than or equal to 7 µm, each first separator 11 may have an increase of 2 µm to 5 µm in thickness compared to the second separator 12.

The battery cell 100 in this embodiment of this application may be prepared using the following method:

Preparation of the positive electrode plate 13a: LiCoO2 (lithium cobalt oxide), Super-P (conductive carbon black), and PVDF (polyvinylidene difluoride, a binder) are mixed well at a mass ratio of 97.6%:1%:1.4%. Then NMP (N-methylpyrrolidone, N-methylpyrrolidone) is added to and mixed well with the resulting mixture, to produce a slurry with certain fluidity. The slurry is separately applied to two surfaces of a 10 µm-thick metal aluminum foil and a single surface of a 20 µm-thick aluminum foil, with a coating weight of 283.9 mg/1540.25 mm², followed by drying to obtain flexible positive electrode plates. Next, the positive electrode plates are cold-pressed and slitted to obtain a single-side coated positive electrode plate (a positive electrode plate of which a current collector has only one side coated with the active substance layer along the thickness direction of the current collector) and a double-side coated positive electrode plate (a positive electrode plate of which a current collector has both sides coated with the active substance layer along the thickness direction of the current collector).

Preparation of the negative electrode plate 13b: Graphite, Super-P (conductive carbon black), CMC (carboxymethylcellulose sodium), and an SBR (polymerized styrene butadiene rubber,) emulsion are added to deionized water at a mass ratio of 98%:0.5%:1.1%:0.4%, followed by mixing and stirring to uniformity to obtain a slurry with certain fluidity. The slurry is applied to two surfaces of a 10 µm-thick metal copper foil with a coating weight of 151.3 mg/1540.25 mm², followed by drying to produce a flexible negative electrode plate 13b which is then cold-pressed and slitted to obtain the negative electrode plate 13b.

Preparation of the battery cell 100: The negative electrode plate 13b, the double-side coated positive electrode plate, and the single-side coated positive electrode plate are punched into sheets with a specified size using a forming mold. These sheets are then stacked with a first separator (with a thickness of 9 µm) and a second separator (with a thickness of 7 µm), and the resulting stack is hot-pressed to form an electrode assembly 10 with a dimension of 31*39*94 (31 mm thick, 39 mm wide, and 94 mm long). The electrode assembly 10 is then subjected to processes such as welding with electrode tabs, top sealing, side sealing, vacuum drying, electrolyte injection, vacuum packaging, formation, aging, and molding, so as to produce the finished battery cell.

The battery cell 100 prepared using the foregoing method is subjected to the high-voltage test. The specific test method as follows: All positive electrode tabs of the electrode assembly 10 are welded into a whole which is then welded with an adaptor, and all the negative electrode tabs of the electrode assembly 10 are welded into a whole which is then welded with another adaptor. Then, two probes of a high-voltage tester are respectively brought into contact with the positive and negative electrode terminals of the battery cell 100, a voltage of 30 V to 50 V is applied, and the internal resistance of the battery cell 100 is measured. If the resistance is greater than 1M ohm, it is determined that the battery cell 100 has passed the high-voltage test; otherwise, it is determined that the battery cell 100 has failed the high-voltage test. In other different embodiments, through testing, the thickness of the first separator 11 can be increased by 2 µm to 5 µm compared to the thickness (h₂=7 µm) of the second separator 12. After the test, the battery cell 100 prepared in the foregoing different embodiments shows an increase of at least 2% in the pass rate of the high-voltage test compared to the battery cell 100 with both the thickness h₁ of the first separator 11 and the thickness h₂ of the second separator 12 as 7 µm.

For example, under the condition that the thickness h₁ of the first separator 11 and the thickness h₂ of the second separator 12 are both 7 µm, the battery cell 100 shows a pass rate loss of 5% in the high-voltage test. Under a condition that the thickness h₂ of the second separator 12 is 7 µm and the thickness h₂ of the first separator 11 is 9 µm (compared to the first separator 11, the second separator 12 has an increase of 2 µm in thickness), the pass rate loss of the battery cell 100 decreases from 5% to 3% in the high-voltage test.

The battery cell 100 prepared using the foregoing method is subjected to the impact test. The specific test method is as follows: Under a condition that the battery cell 100 is fully charged, in a test environment of 20±5°C, samples are placed on the test platform, and a rod with a diameter of 15.8 mm is positioned at the center of the wide surface of the sample. For cylindrical, pouch, and prismatic samples, the longitudinal axis of each sample is parallel to the flat surface, and perpendicular to the longitudinal axis of the rod. A hammer with a weight of 9.1±0.1 kg is vertically dropped in free-fall state from a height of 610±25 mm onto the intersection of the rod and the sample. If the battery cell 100 does not ignite or explode, it passes the impact test. In other different embodiments, the thickness of the first separator 11 can be increased by 2 µm to 5 µm compared to the thickness (h₂=7 µm) of the second separator 12. After the test, the battery cell 100 prepared in the foregoing different embodiments shows an increase of at least 5% in the pass rate of the impact test compared to the battery cell 100 with both the thickness h₁ of the first separator 11 and the thickness h₂ of the second separator 12 as 7 µm.

For example, under the condition that the thickness h₁ of the first separator 11 and the thickness of the second separator 12 are both 7 µm, the battery cell 100 shows a pass rate loss of 5% in the high-voltage test. Under a condition that the thickness h₂ of the second separator 12 is 7 µm and the thickness h₂ of the first separator 11 is 9 µm (compared to the first separator 11, the second separator 12 has an increase of 2 µm in thickness), the pass rate of the battery cell 100 is increased by 5% in the impact test.

Because the thickness of the first separator 11 is larger than the thickness of the second separator 12, the first separator 11 occupies a larger space, which leads to a decrease in the energy density of the battery cell 100. To alleviate the problem that the large thickness of the first separator 11 decreases the energy density of the battery cell 100, in some embodiments, thicknesses of the current collectors 133 of some or all of the electrode plates 13 can be reduced.

For example, in some embodiments, the electrode plate 13 includes a current collector 133, and thickness of the current collectors 133 of some of the multiple electrode plates 13 is smaller than thickness of the current collectors 133 of the other electrode plates 13.

That the thickness of the current collectors 133 of some of the multiple electrode plates 13 is smaller than thickness of the current collectors 133 of the other electrode plates 13 can be understood as follows: the thickness of the current collectors 133 of some of the multiple electrode plates 13 is reduced compared to the thickness of the current collectors 133 of the other electrode plates 13, which can alleviate the problem of loss in energy density due to the increased thickness of the first separator 11 compared to the second separator 12. As shown in FIG. 1, the thickness of the current collector 133 of the inner electrode plate 132 is defined as h₃, and the thickness of the current collector 133 of the outer electrode plate 131 is defined as h₄.

Thicknesses of the current collectors 133 of the two outer electrode plates 131 may be the same or different. Thicknesses of the current collectors 133 of all the inner electrode plates 132 may be the same or different.

The current collectors 133 of one or more of the electrode plates 13 may be thinned. The total decreased thickness of the current collectors 133 of the electrode plates 13 may be the same as or different from the total increased thickness of two first separators 11 compared to the second separator 12.

In an embodiment in which the current collectors 133 of multiple electrode plates 13 are thinned, for ease of description, the electrode plate 13 with the thickest current collector 133 is defined as the first electrode plate, and the electrode plate with the current collector 133 thinner than that of the first electrode plate is defined as the second electrode plate. The decreased thickness of the current collector 133 of each second electrode plate compared to the current collector 133 of the first electrode plate may be equal to the decreased thickness of one first separator 11 compared to the second separator 12. Alternatively, the total decreased thickness of the current collectors 133 of multiple second electrode plates compared to the current collector 133 of the first electrode plate may be equal to the total increased thickness of two first separators 11 compared to the second separator 12.

In some embodiments, the thickness of the current collector 133 of the inner electrode plate 132 is smaller than thickness of the current collector 133 of the outer electrode plate 131. It can be understood that the thickness of the current collector 133 of the inner electrode plate 132 is decreased compared to the thickness of the current collector 133 of the outer electrode plate 131, that is, h₃<h₄, which allows the lighter and thinner electrode plates 13 to be located in the middle region of the electrode assembly 10 and clamped by two outer electrode plates 131, thus reducing the risk of the inner electrode plates 132 moving between the two outer electrode plates 131.

In some other embodiments, the thickness of the current collector 133 of the outer electrode plate 131 is smaller than thickness of the current collector 133 of the inner electrode plate 132. It can be understood that the thickness of the current collector 133 of the outer electrode plate 131 is decreased compared to the thickness of the current collector 133 of the inner electrode plate 132, that is, h₄<h₃.

The thickness of the current collector 133 of the outer electrode plate 131 has important effect on the pass rate of the battery cell 100 in the high-voltage test. The thickness of the current collector 133 of the outer electrode plate 131 being smaller than the thickness of the current collector 133 of the inner electrode plate 132 is conducive to increasing the pass rate of the battery cell 100 in high-voltage test.

Further, the thickness of the current collector 133 of the outer electrode plate 131 is m₁, and the thickness of the current collector 133 of the inner electrode plate 132 is m₂, where 2 µm≤m₂-m₁≤5 µm.

Specifically, m₂-m₁ may be 2 µm, 2.5 µm, 3 µm, 3.5 µm, 4 µm, 4.5 µm, 5 µm, or the like.

If m₂-m₁<2 µm, the thickness decrease of the current collector 133 of the outer electrode plate 131 compared to the current collector 133 of the inner electrode plate 132 is quite small, resulting in a weak ability of alleviating loss in the energy density caused by the decreased thickness of the first separator 11 compared to the second separator 12. If m₂-m₁>5 µm, the thickness decrease of the current collector 133 of the outer electrode plate 131 compared to the current collector 133 of the inner electrode plate 132 is quite large, leading to a weak strength of the current collector 133 of the outer electrode plate 131 and leaving the outer electrode plate 131 easy to break and difficult to pass the high-voltage test and impact test. Therefore, 2 µm≤m₂-m₁≤5 µm not only ensures that the outer electrode plate 131 has good strength, but also ensures that the thickness decrease of the current collector 133 of the outer electrode plate 131 compared to the current collector 133 of the inner electrode plate 132 can significantly alleviate the problem of loss in the energy density caused by the increased thickness of the first separator 11 compared to the second separator 12.

Certainly, in some other embodiments, the thicknesses of the current collectors 133 of all the electrode plates 13 may be the same.

As shown in FIG. 1, the battery cell 100 may include multiple second separators 12, where all the second separators 12 are independent of each other, and all the second separators 12 are stacked along the first direction X. The first separator 11 is independent of the second separator 12.

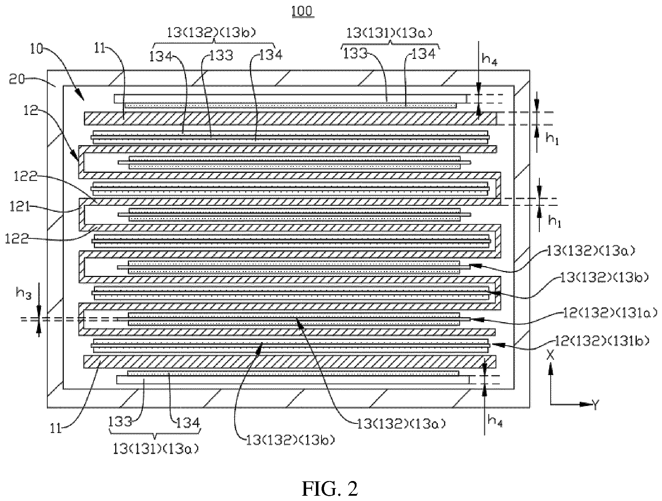

As shown in FIG. 2, in some embodiments, only one second separator 12 may be provided. The second separator 12 includes a connecting section 121 and multiple body sections 122, the multiple body sections 122 are arranged along a stacking direction of the electrode plates 13, adjacent two of the inner electrode plates 132 are separated by the body section 122, and the connecting section 121 connects two adjacent body sections 122.

In these embodiments, the thickness h₂ of the second separator 12 refers to the thickness of the body section 122. The thicknesses of the body section and the connecting section 121 may be the same or different.

Two adjacent body sections 122 are connected by one connecting section 121, and an end of one body section 122 is connected to only one connecting section 121. The connecting section 121 is connected to an end of the body section along a second direction Y, the first direction X being perpendicular to the second direction Y.

The body section 122 and the connecting section 121 may be disposed separately and then integrated into a whole structure through bonding or the like to form a continuous second separator 12. The body section 122 and the connecting section 121 may alternatively be integrally formed.

The second separator 12 includes a connecting section 121 and multiple body sections 122, two adjacent body sections 122 are connected by the connecting section 121, making the second separator 12 a continuous structure. This facilitates the assembly and formation of the electrode assembly 10, and allows the second separator 12 to better separate any two adjacent inner electrode plates 132.

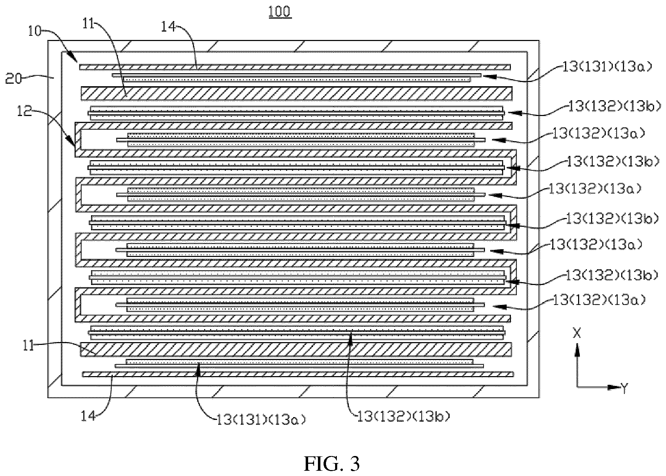

As shown in FIG. 3, in some embodiments, the electrode assembly 10 further includes two third separators 14, and the two third separators 14 are respectively disposed on sides of the two outer electrode plates 131 back away from the inner electrode plates 132 along the first direction X. The third separator 14 is configured to separate the outer electrode plate 131 from the housing 20 along the first direction X, to reduce the safety risk of electrical leakage caused by the contact between the outer electrode plate 131 and the housing 20.

An embodiment of this application further provides a secondary battery, where the second battery includes the battery cell 100 provided in any one of the foregoing embodiments.

The secondary battery may include multiple battery cells 100, and the multiple battery cells 100 are connected in series, parallel, or series-parallel via a busbar (not shown in the figure).

The battery cell 100 provided in any one of the foregoing embodiments has low risk of short circuit as well as good safety and reliability, and the battery including such battery cell 100 also has good safety and reliability.

An embodiment of this application further provides an electric device, where the electric device includes the secondary battery provided in the foregoing embodiment. The secondary battery serves as a power source for the electric device, enabling the electric device to perform its own function.

The electric device may be but is not limited to a mobile phone, a tablet, a laptop, an electric drill, an electric saw, an electric car, an electric motorcycle, an electric bicycle, or the like.

The secondary battery provided in the foregoing embodiment has good safety and reliability, and can improve the electrical safety of the electric device powered by such secondary battery, and the secondary battery can also stably and reliably supply power to the electric device.

The foregoing descriptions are merely preferred embodiments of this application, but are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A battery cell, comprising an electrode assembly, wherein the electrode assembly comprises:
multiple electrode plates stacked, the multiple electrode plates comprising two outer electrode plates located at two ends and multiple inner electrode plates located between the two outer electrode plates;
a first separator disposed between the outer electrode plate and the inner electrode plate adjacent to the outer electrode plate; and
a second separator disposed between adjacent two of the inner electrode plates;
wherein thickness of the first separator is greater than thickness of the second separator.

2. The battery cell according to claim 1, wherein the thickness of the first separator is h₁, and the thickness of the second separator is h₂, wherein 2 µm≤h₁-h₂≤5 µm.

3. The battery cell according to claim 2, wherein 3 µm≤h₁-h₂≤5 µm.

4. The battery cell according to claim 1, wherein the thickness of the second separator is h₂, wherein 0 µm≤h₂≤7 µm.

5. The battery cell according to claim 4, wherein 3 µm≤h₂≤6 µm.

6. The battery cell according to claim 1, wherein the thickness of the first separator is h₁, and the thickness of the second separator is h₂, wherein h₁-h₂>5 µm.

7. The battery cell according to any one of claims 1 to 6, wherein the electrode plate comprises a current collector, and thickness of the current collectors of some of the multiple electrode plates is smaller than thickness of the current collectors of the other electrode plates.

8. The battery cell according to claim 7, wherein thickness of the current collector of the outer electrode plate is smaller than thickness of the current collector of the inner electrode plate.

9. The battery cell according to claim 8, wherein the thickness of the current collector of the outer electrode plate is m₁, and the thickness of the current collector of the inner electrode plate is m₂, wherein 2 µm≤m₂-m₁≤5 µm.

10. The battery cell according to claim 1, wherein the second separator comprises a connecting section and multiple body sections, the multiple body sections are arranged along a stacking direction of the electrode plates, adjacent two of the inner electrode plates are separated by the body section, and the connecting section connects adjacent two of the body sections.

11. A secondary battery, comprising the battery cell according to any one of claims 1 to 10.

12. An electric device, comprising the secondary battery according to claim 11.
